# EUROPÄISCHE PATENTANMELDUNG

(11) **EP 2 014 940 A1**
(43) Veröffentlichungstag der Anmeldung: **14.01.2009**
(21) Anmeldenummer: 07011631.4
(22) Anmeldetag: 13.06.2007
(51) Int. Cl.: F16D 3/205

(54) **Kompakt-Gelenk**

(71) Anmelder: Karrenberg Lutz, 42551 Velbert (DE)
(72) Erfinder: Karrenberg Lutz, 42551 Velbert (DE)
(74) Vertreter: Runge, Karl R.

(57) **Zusammenfassung**

Die Anmeldung befasst sich mit einer Gelenkverbindung, bestehend aus Kugelkopf und Gelenkpfanne.

Die Neuerung liegt in der Verwendung von vorzugsweise ellipsoidförmig angebrachten Erhebungen im Bereich des Kugelkopfes und des Ansatzes der Gelenkwelle und korrespondierend angebrachten vorzugsweise ellipsoidförmigen Vertiefungen im Bereich der Gelenkpfanne.

## Beschreibung

Die Neuerung betrifft eine gelenkartige Verbindung, die zur Kraftübertragung einer Drehbewegung durch einfaches Zusammenstecken zweier Bauteile erstellt wird. Die beiden Drehachsen können hierbei in verschiedensten Winkeln zueinander auftreten, eine Begrenzung der Bewegung der Drehachsen zueinander erfolgt durch die neuartige Gestaltung von Gelenkpfanne und Kugelkopf.

Derartige Gelenke, bestehend aus Gelenkpfanne und Kugelkopf, werden nach dem Stand der Technik z.B. mit Splinten verbunden und durch diese Splinte in den Bewegungen zueinander eingeschränkt. Die herkömmliche Bauweise ist aufgrund zusätzlicher Teile (z.B. Splinte) und aufwendigerer Montage (z.B. Einsetzen eines Splintes) gegenüber der Neuerung kostenintensiver herzustellen. Die Neuerung, die bevorzugt aus Kunststoff zu fertigen ist, ist in der Art und Weise des Zusammenfügens (zwei Teile werden ineinandergesteckt) und des zeitlichen Aufwandes der Herstellung eine erhebliche Verbesserung gegenüber dem Stand der Technik dar.

Die Kraftübertragung und die räumliche Bewegungsbegrenzung zwischen der Gelenkpfanne und der Gelenkkugel (Kugelkopf) der Neuerung erreicht durch die Anbringung von ellipsoidförmigen Erhebungen auf der Gelenkkugel, und zwar um 180°-versetzt gegenüberliegend auf der Kugel. Gleichzeitig wird auch der Ansatzbereich der Gelenkwelle an der Kugel so ausgebildet, dass ebenfalls eine ellipsoidförmige Erhebung entsteht. Letztere sorgt je nach ihrer Ausgestaltung für eine räumliche Einschränkung der Bewegung der Drehachsen zueinander, ohne dass weitere Bauteile nötig sind.

Korrespondierend zu der förmlichen Ausgestaltung der Gelenkkugel enthält die Gelenkpfanne entsprechend konstruierte und geformte Aussparungen, die die ellipsoidförmigen Erhebungen der Gelenkkugel aufnehmen.

Im Folgenden wird die Neuerung näher beschrieben und anhand von Zeichnungen genauer dargestellt.

Es zeigen:
- Fig. 1: die Gelenkwelle nebst Kugelkopf
- Fig. 2: die Gelenkpfanne
- Fig. 3: die Gelenkwelle nebst Kugelkopf aufgenommen in der Gelenkpfanne

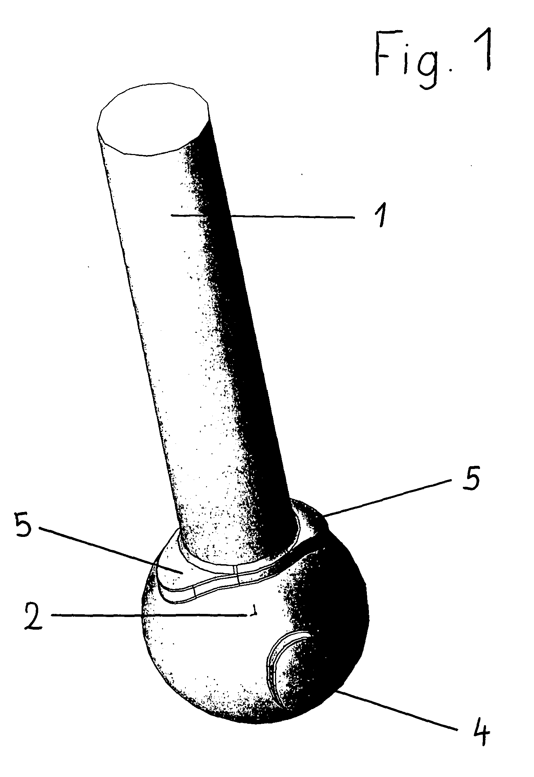

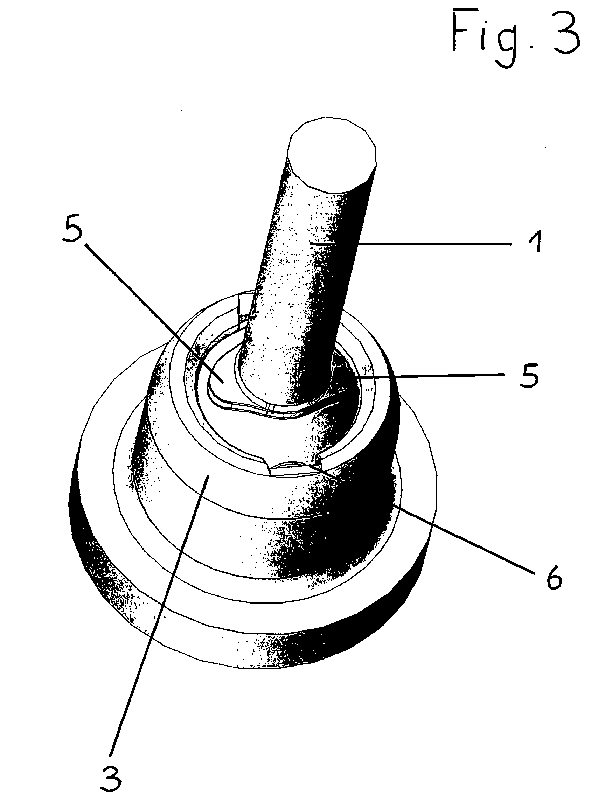

Wie die Fig. 1 bis 3 zeigen, besteht das neuerungsgemäße Gelenk aus der Gelenkwelle (1), dem Kugelkopf (2) und der Gelenkpfanne (3). Am Kugelkopf sind die seitlich angebrachten ellipsoidförmigen Erhebungen (4) erkennbar sowie die ellipsoidförmige Erhebung im Breich des Ansatzes der Gelenkwelle an den Gelenkkopf (5).

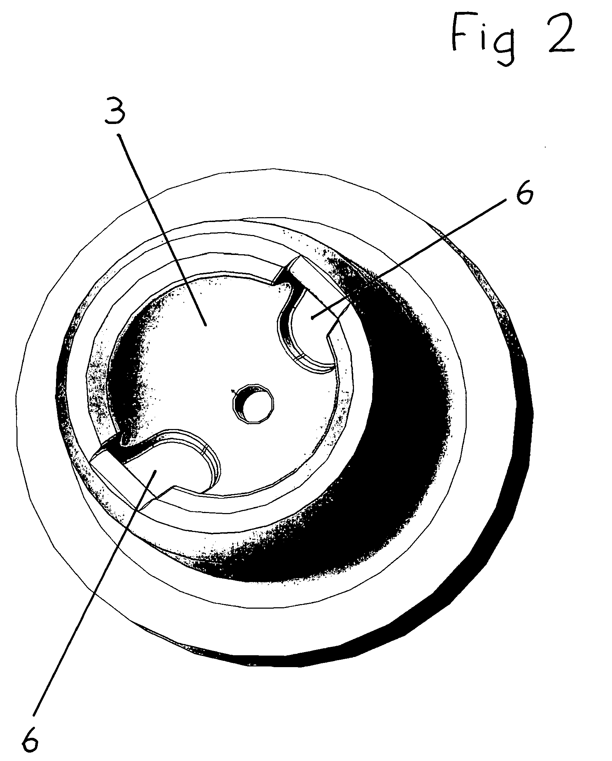

In der Gelenkpfanne (Fig. 2) sind die korrespondierend zu den Erhebungen auf dem Kugelkopf vorhandenen Vertiefungen (6) vorhanden.

## Patentansprüche

1. Gelenkartige Verbindung,
**dadurch gekennzeichnet, dass** der Gelenkkopf eine kugelähnliche Form besitzt und durch ein Überdecken des Gelenkkopfäquators durch die Gelenkpfanne die Antriebswelle formschlüssig an die Abtriebswelle befestigt ist und durch Toleranzüberdeckung eine kraftschlüssige Verbindung entsteht, die eine spielfreie Übertragung der Bewegungen und Kräfte ermöglicht, ohne das Splinte oder sonstige Bauteile nötig werden.

2. Kompakt-Gelenk nach Anspruch 1.,
**dadurch gekennzeichnet, dass** durch am Kugelkopf und der Gelenkpfanne an- und eingebrachte Ellipsoidgeometrien die Freiheitsgrade der Achsenbewegungen zueinander ganz oder teilweise definiert eingeschränkt werden können.

3. Kompakt-Gelenk nach Anspruch 1.,
**dadurch gekennzeichnet, dass** es ohne weitere Werkstücke, z.B. Splinte, durch einfaches Ineinanderpressen fixiert wird und durch Anbringung geometrischer Formen, die nicht ausschließlich ellipsoiden Charakter haben müssen, in der Bewegung der Achsen zu einander eingeschränkt werden.
